# EUROPÄISCHE PATENTANMELDUNG

(11) **EP 4 403 812 A1**
(43) Veröffentlichungstag der Anmeldung: **24.07.2024**
(21) Anmeldenummer: 24150114.7
(22) Anmeldetag: 02.01.2024
(51) Int. Cl.: F16L 25/00, F16L 31/00, F16L 25/14, F24F 1/00

(54) **ADAPTERSTÜCK**

(30) Priorität: 18.01.2023 DE 102023101190
(71) Anmelder: Witzenmann GmbH, 75175 Pforzheim (DE)
(72) Erfinder: Breisinger, Michael, 76307 Karlsbad-Mutschelbach (DE); Drouart, Nicolas, 75331 Grunbach (DE); Schwartz, Patrick, 75245 Neulingen (DE)
(74) Vertreter: LBP Lemcke, Brommer & Partner Patentanwälte mbB

(57) **Zusammenfassung**

Die Erfindung betrifft ein Adapterstück 2 zum alternativen Anschließen von mindestens zwei Ringwellschläuchen 1, 19, deren Schlauchdurchmesser 6, 20 verschieden sind, an eine Öffnung, eine Kupplung oder eine weiterführende Rohrleitung, wobei das Adapterstück 2 mit einem Stutzen 7 zum Einsetzen des anzuschließenden Ringwellschlauchs 1 versehen ist.

Der Stutzen 7 weist eine Innenkontur 8 mit Ringnuten 9 auf, die jeweils im Wesentlichen einer Negativform einer Wellenaußenkrempe des anzuschließenden Ringwellschlauchs 1 entspricht, wobei der Innendurchmesser 10 des Stutzens mindestens zwei Durchmesserstufen aufweist. In einer ersten Durchmesserstufe ist mindestens eine erste Ringnut 9 mit einem ersten Innendurchmesser 10 formschlüssig auf eine Außenkrempe 5 eines Ringwellschlauchs 1 mit einem ersten Schlauchdurchmesser 6 setzbar, während in der zweiten Durchmesserstufe mindestens eine zweite Ringnut mit einem zweiten Innendurchmesser formschlüssig auf eine Außenkrempe eines Ringwellschlauchs mit einem zweiten Schlauchdurchmesser setzbar ist, und wobei die Ringnut mit kleinerem Innendurchmesser weiter von einer Stutzenöffnung 11 entfernt angeordnet ist, als die Ringnut mit größerem Innendurchmesser.

## Beschreibung

Die Erfindung betrifft ein Adapterstück zum alternativen Anschließen von mindestens zwei Ringwellschläuchen, deren Schlauchdurchmesser verschieden sind, an eine Öffnung, eine Kupplung oder eine weiterführende Rohrleitung, wobei das Adapterstück mit einem Stutzen zum Einsetzen des anzuschließenden Ringwellschlauchs versehen ist.

Ein bevorzugtes Anwendungsgebiet für die vorliegende Erfindung ist das Gebiet der Lüftungssysteme in Gebäuden. In solchen Lüftungssystemen werden Ringwellschläuche verwendet, die im Gebäude flexibel verlegt werden können und zum Durchleiten von Zuluft bzw. Abluft vorgesehen sind. Hierbei kommen üblicherweise Ringwellschläuche mit unterschiedlichen Nennweiten zum Einsatz; typische Nennweiten für Lüftungssysteme sind 63 mm und 69 mm.

Bei Lüftungssystemen in Gebäuden werden Luftverteilerkästen sowie Luftsammelkästen verwendet, die zentral angeordnet sind und von denen aus einzelne Räume und Bereiche des Gebäudes über Ringwellschläuche belüftet und entlüftet werden. Solche Luftverteilerkästen und Luftsammelkästen sind also üblicherweise mit einer Mehrzahl von Anschlussstellen für Ringwellschläuche versehen. Aus Platzgründen ist es jedoch normalerweise nicht möglich, Anschlussstellen für Ringwellschläuche verschiedener Nennweiten vorzusehen, von denen in der konkreten Einbausituation letztlich nur ein Teil verwendet wird. Die Anschlussstellen an Luftverteilerkästen und Luftsammelkästen sind daher üblicherweise nur auf eine Nennweite ausgelegt.

Luftverteilerkästen und Luftsammelkästen müssen daher in mehreren Versionen für verschiedene Nennweiten von Ringwellschläuchen gefertigt und vorgehalten werden. Darüber hinaus gibt es Anwendungen, bei denen aus strömungstechnischen Gründen Ringwellschläuche unterschiedlicher Nennweiten an ein und demselben Luftverteilerkasten oder Luftsammelkasten angeschlossen werden sollen. Dies würde eine Spezialausführung eines Luftverteilerkastens bzw. Luftsammelkastens bedingen, oder aber den Einsatz von Adapterstücken erforderlich machen, die dazu dienen, Ringwellschläuche unterschiedlicher Nennweiten bzw. Schlauchdurchmesser alternativ anschließen zu können, also entweder einen Ringwellschlauch mit einem ersten Schlauchdurchmesser oder einen Ringwellschlauch mit einem zweiten (oder dritten, vierten etc.) Schlauchdurchmesser.

Neben dem genannten, bevorzugten Anwendungsgebiet der Lüftungssysteme in Gebäuden gibt es auch in nahezu allen anderen Gebieten, in denen Ringwellschläuche verwendet und an eine Öffnung, eine Kupplung oder eine weiterführende Rohrleitung angeschlossen werden, das Bedürfnis, unterschiedliche Schlauchdurchmesser mit möglichst nur einem Adapterstück an eine Öffnung oder eine weiterführende Rohrleitung anzuschließen.

Der Erfindung liegt daher die Aufgabe zugrunde, ein Adapterstück der eingangs genannten Art vorzuschlagen, mit dem mindestens zwei Ringwellschläuche mit unterschiedlichen Schlauchdurchmessern alternativ an eine Öffnung, eine Kupplung oder eine weiterführende Rohrleitung angeschlossen werden können, mit möglichst einfacher Handhabung und möglichst geringem konstruktiven Aufwand. Bevorzugt sollen Ringwellschläuche mit mehr als zwei unterschiedlichen Durchmessern mit einem einzigen Adapterstück angeschlossen werden können.

Gelöst ist diese Aufgabe durch ein Adapterstück mit den Merkmalen des beigefügten Anspruchs 1. Vorteilhafte Ausgestaltungen und Weiterbildungen des erfindungsgemäßen Adapterstücks sind in den Ansprüchen 2 bis 13 niedergelegt.

Ein erfindungsgemäßes Adapterstück zum alternativen Anschließen von mindestens zwei Ringwellschläuchen, deren Schlauchdurchmesser verschieden sind, an eine Öffnung, eine Kupplung oder eine weiterführende Rohrleitung ist demnach mit einem Stutzen zum Einsetzen des anzuschließenden Ringwellschlauchs versehen, wobei der Stutzen eine Innenkontur mit Ringnuten aufweist, die jeweils im Wesentlichen einer Negativform einer Wellenaußenkrempe des anzuschließenden Ringwellschlauchs entsprechen, wobei der Innendurchmesser des Stutzens mindestens zwei Durchmesserstufen aufweist, wobei in der ersten Durchmesserstufe mindestens eine erste Ringnut mit einem ersten Innendurchmesser formschlüssig auf eine Außenkrempe eines Ringwellschlauchs mit einem ersten Schlauchdurchmesser setzbar ist, während in der zweiten Durchmesserstufe mindestens eine zweite Ringnut mit einem zweiten Innendurchmesser formschlüssig auf eine Außenkrempe eines Ringwellschlauchs mit einem zweiten Schlauchdurchmesser setzbar ist, und wobei die Ringnut mit kleinerem Innendurchmesser weiter von einer Stutzenöffnung entfernt angeordnet ist, als die Ringnut mit dem größeren Innendurchmesser.

Durch diese erfindungsgemäße Ausbildung eines Adapterstücks kann also ein Ringwellschlauch mit kleinerem Schlauchdurchmesser ganz einfach weiter in den Stutzen des Adapterstücks eingeführt werden, um dort auf mindestens eine Ringnut zu treffen, die formschlüssig auf mindestens einer Außenkrempe des Ringwellschlauchs sitzt und diesen so im Adapterstück hält. Ein zweiter Ringwellschlauch mit größerem Schlauchdurchmesser hingegen wird nicht so weit in den Stutzen des Adapterstücks eingeschoben, so dass er in einer zweiten, grö-βeren Durchmesserstufe auf mindestens eine Ringnut trifft, die mindestens eine Außenkrempe des zweiten Ringwellschlauchs mit größerem Schlauchdurchmesser formschlüssig aufnimmt und so im Stutzen des Adapterstücks hält.

Vorzugsweise gibt es nicht nur zwei Durchmesserstufen des Innendurchmessers des Stutzens des erfindungsgemäßen Adapterstücks, sondern mehrere Durchmesserstufen, so dass sich eine, von der Stutzenöffnung beginnend, konisch verjüngende Innenkontur des Stutzens ergibt. Hierbei kann jede Ringnut in der Innenkontur des Stutzens eine eigene Durchmesserstufe bilden, so das, je nach Anzahl der Ringnuten, Ringwellschläuche mit einer Vielzahl von unterschiedlichen Schlauchdurchmessern angeschlossen werden können; es handelt sich dann um ein Universal-Adapterstück für einen ganzen Bereich an Schlauchdurchmessern. Gleichwohl ist auch eine lediglich zweistufige Ausbildung der Innenkontur des Adapterstück-Stutzes mit beispielsweise mehreren Ringnuten je Durchmesserstufe von der vorliegenden Erfindung umfasst.

Wenn der Stutzen des erfindungsgemäßen Adapterstücks aus einem elastisch verformbaren Material besteht oder an seiner Innenkontur mit einem elastisch verformbaren Polymer ausgekleidet ist, ergibt sich durch den Formschluss zwischen mindestens einer Ringnut in der Innenkontur des Stutzens und mindestens einer Außenkrempe des Ringwellschlauchs neben der Haltefunktion auch eine sehr vorteilhafte Abdichtfunktion der Verbindung zwischen dem Ringwellschlauch und dem Adapterstück. Darüber hinaus ergibt sich so die Möglichkeit, den Ringwellschlauch einrastend in den Stutzen des Adapterstücks zu stecken, d.h., ihn so weit in den Stutzen einzuführen, bis der Innendurchmesser des Stutzens zu klein wird, um den Ringwellschlauch trotz der elastischen Verformung der Innenkontur weiter hineinschieben zu können. Der Ringwellschlauch sitzt dann im Ergebnis einrastend optimal in der Innenkontur des Stutzens.

Eine solche Auskleindung des Stutzens des Adapterstücks mit einem elastisch verformbaren Polymer kann ganz einfach dadurch erzielt werden, dass der Stutzen des Adapterstücks aus Kunststoff gefertigt und in Zweikomponenten-Spritzgusstechnik mit Auskleidung an seiner Innenkontur versehen wird. Hierbei wird die Auskleidung der Innenkontur des Stutzens in Kunststoff-Spritzgusstechnik an das restliche Adapterstück angespritzt, welches kurz zuvor vorzugsweise in ein und derselben Spritzgussform, deren Kavität danach erweitert worden ist, hergestellt wurde. Die beiden Kunststoffkomponenten verbinden sich auf diese Weise stoffschlüssig.

Das erfindungsgemäße Adapterstück kann einteilig ausgebildet sein, insbesondere dann, wenn wie vorstehend erwähnt, eine einrastende Verbindung zwischen dem eingesteckten Ringwellschlauch und der Innenkontur des Adapterstück-Stutzens vorgesehen ist. Besondere Vorteile ergeben sich jedoch, wenn das Adapterstück zwei Adapterteile umfasst, deren Trennfläche sich axial von der Stutzenöffnung bis mindestens zu einem Bereich der Ringnut mit dem kleinsten Innendurchmesser erstreckt. Eine solche Trennfläche verläuft zweckmäßigerweise axial und liegt in einer Ebene, die die Längsachse des Stutzens mit einschließt, so dass sich zumindest in einem Einsteckbereich eines Ringwellschlauchs mit kleinstem Schlauchdurchmesser zwei Halbschalen ergeben, zwischen denen der Ringwellschlauch aufgrund des Formschlusses zwischen den Ringnuten und den Außenkrempen festgehalten wird.

Die beiden Adapterteile können mit einem Scharnier untereinander verbunden sein, wobei die Scharnierachse parallel zur Längsachse des Adapterstücks verläuft, um das Adapterstück an diesem Scharnier auf- und zuklappen zu können.

Zweckmäßigerweise ist, ob mit oder ohne Scharnier, eine Sicherungseinrichtung vorhanden, die die beiden Adapterteile in einem zugeklappten bzw. aufeinandergesetzten Zustand aneinander befestigt. Wenn ein Scharnier vorhanden ist, ist die Sicherungseinrichtung vorzugsweise gegenüber dem Scharnier angeordnet. Die Sicherungseinrichtung kann im Wesentlichen aus mindestens einer Rastlasche an einem der beiden Adapterteile und mindestens einer Rastkante am anderen der beiden Adapterteile bestehen, so dass die vorzugsweise halbschalenförmigen Adapterteile nach Einlegen eines Ringwellschlauchs zugeklappt bzw, aufeinandergesetzt und mittels Einrasten aneinander gesichert werden können.

Um das Adapterstück an einer Öffnung, einer Kupplung oder einer weiterführenden Rohrleitung anbringen zu können, ist das Adapterstück vorzugsweise mit einer Anschlussvorrichtung zum Befestigen, vorzugsweise zum lösbaren Befestigen versehen, wobei die Anschlussvorrichtung eine Bajonettverschlusshälfte oder ein Rohrstück mit Außen- oder Innengewinde sein kann.

Soweit das Adapterstück zwei Adapterteile umfasst, insbesondere zwei auf- und zuklappbare oder trennbare Halbschalen, ist es zweckmäßig, wenn die Anschlussvorrichtung, insbesondere wenn sie eine Bajonettverschlusshälfte oder ein Gewinderohrstück ist, nicht trennbar ist, sondern einstückig an einem der beiden Adapterteile angeformt ist. Neben der solcherart nicht beeinträchtigten Stabilität der Anschlussvorrichtung ergibt sich so auch der Vorteil, dass die Anschlussvorrichtung gar nicht gelöst werden muss, wenn der Ringwellschlauch aus dem Stutzen des Adapterstücks herausgenommen und ersetzt werden soll.

Das erfindungsgemäße Adapterstück wird erfindungsgemäß bevorzugt als Anschlussstück für Schlauchleitungen mit mindestens zwei unterschiedlichen Nennweiten an einem Luftverteilerkasten oder einem Luftsammelkasten für Lüftungssysteme verwendet.

Das erfindungsgemäß ausgebildete Adapterstück kann, anstatt einer Anschlussvorrichtung zum Befestigen an einer Öffnung, einer Kupplung oder einer weiterführenden Rohrleitung, auch mit zwei gegenüberliegenden Stutzen zum Einsetzen von zwei Ringwellschläuchen versehen sein und hierdurch eine Schlauchkupplung bilden. Es handelt sich dann um eine Universal-Schlauchkupplung, die an ihren beiden Enden mit unterschiedlichen Nennweiten der zu verbindenden Ringwellschläuche zurechtkommt. Das solcherart als Schlauchkupplung ausgebildete Adapterstück kann somit auch als Reduzierstück zur Verbindung zweier Ringwellschläuche mit unterschiedlichen Schlauchdurchmessern dienen.

Auch bei der Ausbildung des erfindungsgemäßen Adapterstücks als Schlauchkupplung kann das Adapterstück einteilig oder auch mit zwei trennbaren Adapterteilen ausgeführt sein.

Drei Ausführungsbeispiele für ein erfindungsgemäßes Adapterstück werden im Folgenden anhand der beigefügten Zeichnungen näher beschrieben und erläutert. Es zeigen:
- Figur 1: ein Ausführungsbeispiel eines erfindungsgemäß ausgestalteten Adapterstücks in isometrischer Ansicht;
- Figur 2: das Adapterstück aus Figur 1 in seitlicher Schnittdarstellung;
- Figur 3: ein zweites Ausführungsbeispiel für ein erfindungsgemäß ausgestaltetes Adapterstück, wiederum in isometrischer Darstellung;
- Figur 4: eine seitliche Schnittdarstellung des Adapterstücks aus Figur 3;
- Figur 5: eine axiale Draufsicht auf das Adapterstück aus den Figuren 3 und 4;
- Figur 6: einen Teil des Adapterstücks aus Figur 3;
- Figur 7: einen Teil des Adapterstücks aus Figur 3;
- Figur 8: ein drittes Ausführungsbeispiel eines erfindungsgemäß ausgestalteten, als Schlauchkupplung ausgebildeten Adapterstücks in isometrischer Ansicht;
- Figur 9: eine seitliche Schnittdarstellung des Adapterstücks aus Figur 8.

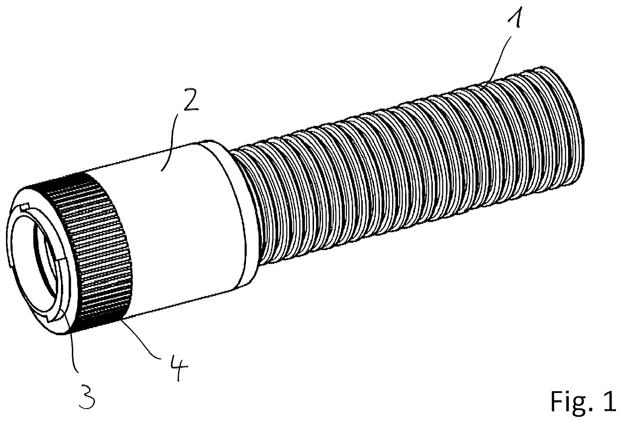

Figur 1 zeigt in isometrischer Darstellung einen ersten Ringwellschlauch 1, der aus Kunststoff gefertigt ist und zur Durchleitung von Luft in einem Gebäude-Lüftungssystem (nicht dargestellt) vorgesehen ist, mit einem auf ein Ende des Ringwellschlauchs 1 gesetzten Adapterstück 2, das erfindungsgemäß ausgestaltet ist. Dieses Adapterstück 2 dient dazu, den ersten Ringwellschlauch 1 an einer Anschlussöffnung eines Luftverteilerkastens (nicht dargestellt) anzubringen. Hierfür weist das Adapterstück 2 an seinem dem Ringwellschlauch 1 gegenüberliegenden Ende eine Bajonettverschlusshälfte 3 als Anschlussvorrichtung zum Befestigen am Luftverteilerkasten (nicht dargestellt) auf. Eine Rändelung 4 an der Oberfläche des Adapterstücks 2 verbessert dessen Handhabbarkeit beim Herstellen einer Bajonettverschluss-Verbindung.

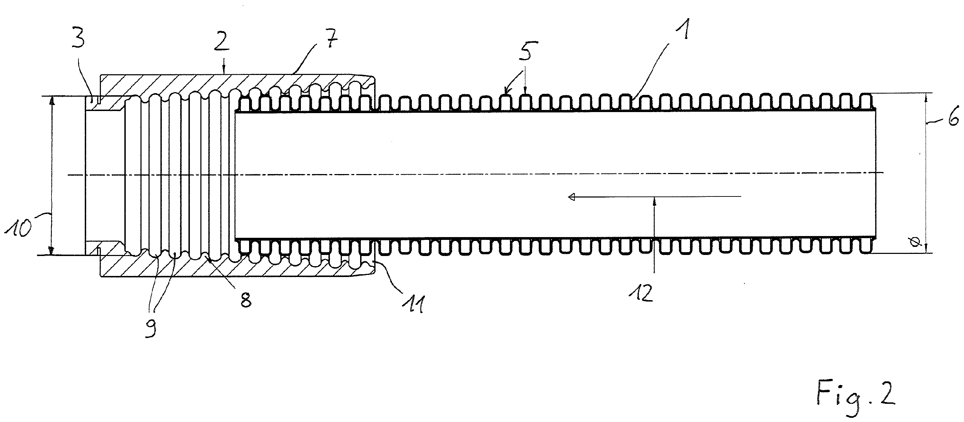

Das hier dargestellte Adapterstück 2 ist ein Universal-Adapterstück zum Anschließen von Ringwellschläuchen verschiedener Nennweiten an ein und derselben Anschlussöffnung mittels ein und desselben Adapterstücks 2, wie sich anhand Figur 2 am besten erkennen lässt:
Das Adapterstück 2 weist einerseits die bereits beschriebene Bajonettverschlusshälfte 3 und andererseits einen Stutzen 7 zum Einsetzen des Ringwellschlauchs 1 auf. Im Inneren des Stutzens 7 findet sich eine Innenkontur 8 mit insgesamt zwölf Ringnuten 9, wobei die Ringnuten 9 so geformt sind, dass sie jeweils eine Außenkrempe 5 einer Wellung des ersten Ringwellschlauchs 1 formschlüssig aufnehmen können.

Die Ringnuten 9 weisen verschiedene Innendurchmesser 10 auf, wobei im vorliegenden Ausführungsbeispiel jede einzelne Ringnut 9 eine eigene Durchmesserstufe des Innendurchmessers 10 bildet, so dass sich insgesamt eine konische Innenkontur 8 ergibt, die sich, ausgehend von einer Stutzenöffnung 11, in die der erste Ringwellschlauch 1 in einer Einsteckrichtung 12 eingeführt wird, in vielen kleinen Stufen, d.h. insgesamt konisch verjüngt.

Der erste Ringwellschlauch 1 besitzt einen ersten Schlauchdurchmesser 6, der eine erste Nennweite definiert. Dieser Schlauchdurchmesser 6 entspricht in etwa dem Innendurchmesser 10 der kleinsten, in Figur 2 ganz links liegend dargestellten Ringnut 9, so dass der Ringwellschlauch 1 so weit in Einsteckrichtung 12 in den Stutzen 7 hineingeschoben werden kann, bis die erste, am vorderen Ende des Ringwellschlauchs 1 befindliche Außenkrempe 5 formschlüssig in der Ringnut 9 mit kleinstem Innendurchmesser 10 gehalten wird. Das Adapterstück 2 besteht vorliegend aus Kunststoff und ist (nicht explizit dargestellt) mit einem elastisch verformbaren Polymer ausgekleidet (wobei alternativ auch der Stutzen 7 an sich elastisch verformbar ausgebildet sein kann), so dass die vorderste Au-βenkrempe 5 des Ringwellschlauchs 1 in die entsprechende Ringnut 9 elastisch einrastet und so zum einen gegen ein unbeabsichtigtes Herausziehen geschützt ist und zum anderen eine dichte Verbindung zwischen dem Ringwellschlauch 1 und dem Adapterstück 2 bildet.

In Figur 2 ist eine Situation dargestellt, in der die Außenkrempe 5 der vordersten Wellung des Ringwellschlauchs 1 zwischen der sechsten und siebten Ringnut 9 an der Innenkontur 8 des Stutzens 7 bereits anliegt, so dass ein weiteres Hineinschieben des Ringwellschlauchs 1 nur noch rastend gegen einen elastischen Widerstand der Innenkontur 8 möglich ist. Andererseits ergibt sich so nicht nur ein Formschluss der letzten Ringnut 9 mit der Außenkrempe 5 der ersten Wellung, sondern auch zumindest teilweise formschlüssige Kontakte zwischen den fünf benachbarten Ringnuten 9 und den entsprechenden Außenkrempen 5 hinter der ersten Wellung des Ringwellschlauchs 1, was für eine größere Stabilität der Verbindung zwischen dem Ringwellschlauch 1 und dem Adapterstück 2 sorgt.

Wird ein Ringwellschlauch mit einem größeren Schlauchdurchmesser in den Stutzen 7 des Adapterstücks 2 eingeschoben, ergibt sich der Formschluss mit einer oder mehreren Ringnuten 9 in der Innenkontur 8 des Stutzens 7 entsprechend früher; der Ringwellschlauch kann dann nicht so weit in das Adapterstück 2 hineingeschoben werden, wie der erste Ringwellschlauch 1, der in Figur 2 dargestellt ist.

Neben der in Figur 2 dargestellten konischen Ausbildung der Innenkontur 8 ist es beispielsweise auch möglich, nur zwei unterschiedliche Innendurchmesser 10 für die Ringnuten 9 vorzusehen, so dass beispielsweise fünf Ringnuten 9 einen Innendurchmesser 10 einer ersten Durchmesserstufe, und fünf weitere Ringnuten 9 einen Innendurchmesser 10 einer zweiten Durchmesserstufe aufweisen. In diesem Fall ist das Adapterstück 2 lediglich für Ringwellschläuche mit zwei unterschiedlichen Nennweiten vorgesehen, die dann allerdings entsprechend stabiler formschlüssig in der Innenkontur 8 des Stutzens 7 festgehalten werden.

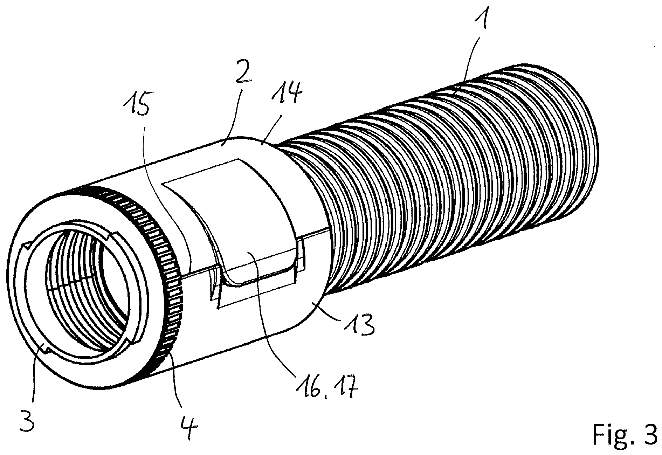

Figur 3 zeigt ein zweites Ausführungsbeispiel für ein erfindungsgemäß ausgestaltetes Adapterstück 2 in einer ähnlichen Darstellung wie Figur 1. Auch hier ist ein erster Ringwellschlauch 1 in das Adapterstück 2 eingesteckt, und das Adapterstück 2 ist mit einer Bajonettverschlusshälfte 3 und einer Rändelung 4 versehen. Insofern stimmt alles mit dem Ausführungsbeispiel aus Figur 1 überein.

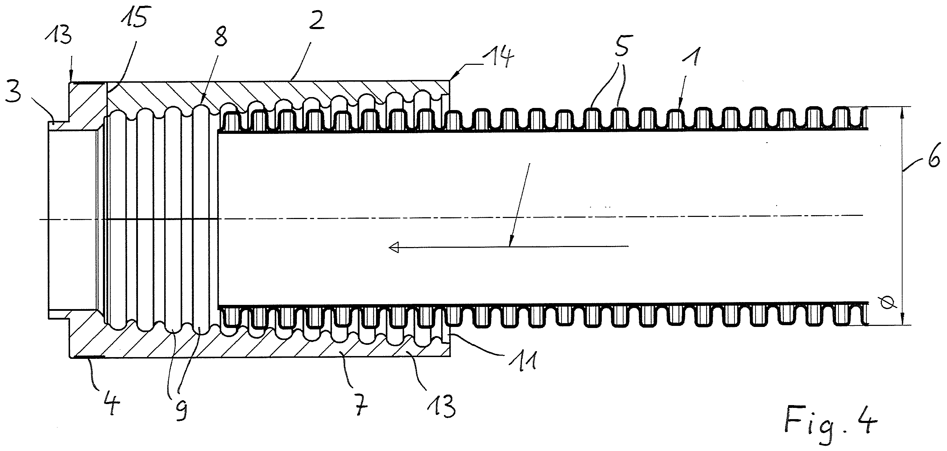

Diesmal besteht das Adapterstück 2 jedoch aus zwei Adapterteilen 13, 14, die an einer Trennfläche 15 voneinander getrennt werden können und im Bereich des Stutzens 7 dann zwei Halbschalen bilden; denn die Trennfläche 15 verläuft axial von der Stutzenöffnung 11 bis an das Ende des Stutzens 7, also bis hinter die Ringnut 9 mit kleinstem Innendurchmesser 10, wobei sie eine Ebene aufspannt, die die Längsachse des Ringwellschlauchs 1 mit einschließt. Erst kurz vor dem anderen Ende des Adapterstücks 2, das mit der Bajonettverschlusshälfte 3 ausgestattet ist, verläuft die Trennfläche 15 radial, um die Bajonettverschlusshälfte 3 und die Rändelung nicht zu trennen - wie Figur 4 besser zeigt.

Das erste Adapterteil 13 und das zweite Adapterteil 14 werden über zwei gegenüberliegende Sicherungseinrichtungen 16 lösbar aneinander befestigt. Es handelt sich bei diesen Sicherungseinrichtungen 16 um jeweils eine Rastlasche 17 am zweiten Adapterteil 14 und eine dazu passende Rastkante 18 am ersten Adapterteil 13, die einrastend ineinandergreifen, wenn das zweite Adapterteil 14 auf das erste Adapterteil 13 aufgesetzt wird, um einen Formschluss der Innenkontur 8 des Stutzens 7 mit den Außenkrempen 5 des Ringwellschlauchs 1 herzustellen.

Dementsprechend unterscheidet sich die seitliche Schnittdarstellung dieses Ausführungsbeispiels, die in Figur 4 gezeigt ist, kaum von der entsprechenden Darstellung in Figur 2 des ersten Ausführungsbeispiels. Da gleiche Elemente mit gleichen Bezugszeichen versehen sind, kann insoweit auf die Beschreibung der Figur 2 verwiesen werden. Aufgrund der Zweiteilung des Adapterstücks 2 in ein erstes Adapterteil 13 und ein zweites Adapterteil 14 ist der Stutzen 7 des Adapterstücks 2 in zwei Halbschalen geteilt. Daher braucht es keine elastische Verformbarkeit der Innenkontur 8 des Stutzens 7, so dass ein Formschluss zwischen den Außenkrempen 5 des Ringwellschlauchs 1 und den Ringnuten 9 der Innenkontur 8 des Adapterstücks 2, der durch Zusammensetzen der beiden Adapterteile 13 und 14 hergestellt wird, den Ringwellschlauch 1 umso stabiler im Adapterstück 2 festhält.

Auch bei diesem zweiten Ausführungsbeispiel bildet jede Ringnut 9 des Adapterstücks 2 eine eigene Durchmesserstufe des Innendurchmessers 10, so dass es sich auch hier um ein Universal-Adapterstück handelt, das für eine Mehrzahl von Schlauchdurchmessern 6 passend ist.

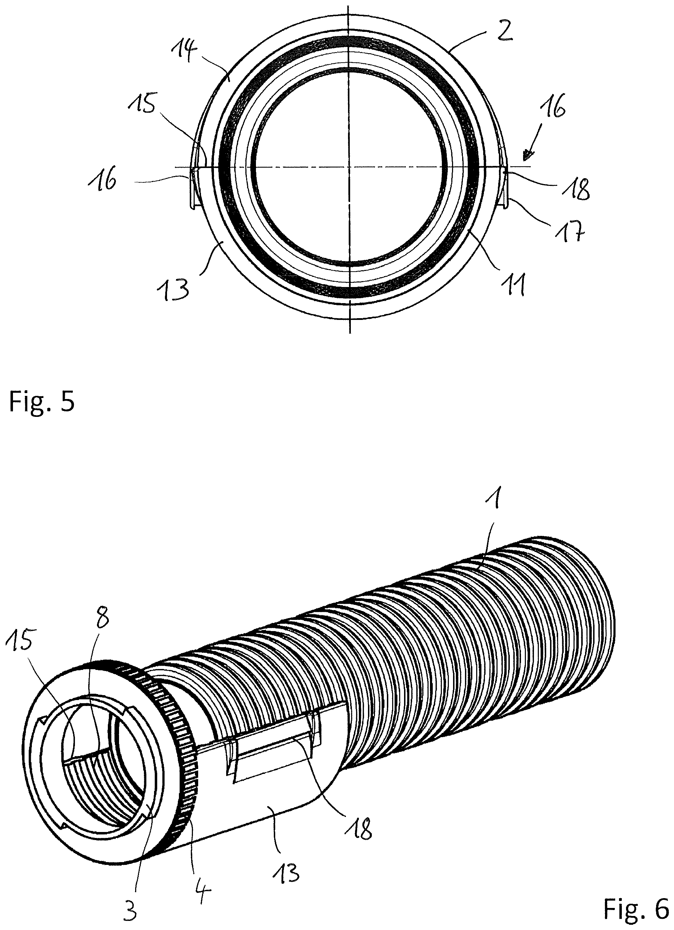

Figur 5 verdeutlicht in einer axialen Draufsicht die Anordnung und Funktionsweise der Sicherungseinrichtungen 16, mit denen das erste Adapterteil 13 (Unterschale) und das zweite Adapterteil 14 (Oberschale) einrastend und lösbar aneinander befestigt sind. Wie hier deutlich wird, kann die Rastlasche 17 jeweils sehr einfach ergriffen und aus dem Eingriff mit der Rastkante 18 gelöst werden, um die beiden Adapterteile 13, 14 voneinander zu trennen.

Selbstverständlich sind auch andere Sicherungseinrichtungen, sowohl lösbare als auch nicht lösbare, vorstellbar und von der vorliegenden Erfindung umfasst. Beispielsweise kann auch lediglich auf einer Seite eine Sicherungseinrichtung 16, beispielsweise mit Rastlasche 17 und Rastkante 18 vorgesehen sein, während an der gegenüberliegenden Seite die beiden Adapterteile 13, 14 mittels eines Scharniers aufklappbar aneinander befestigt sind.

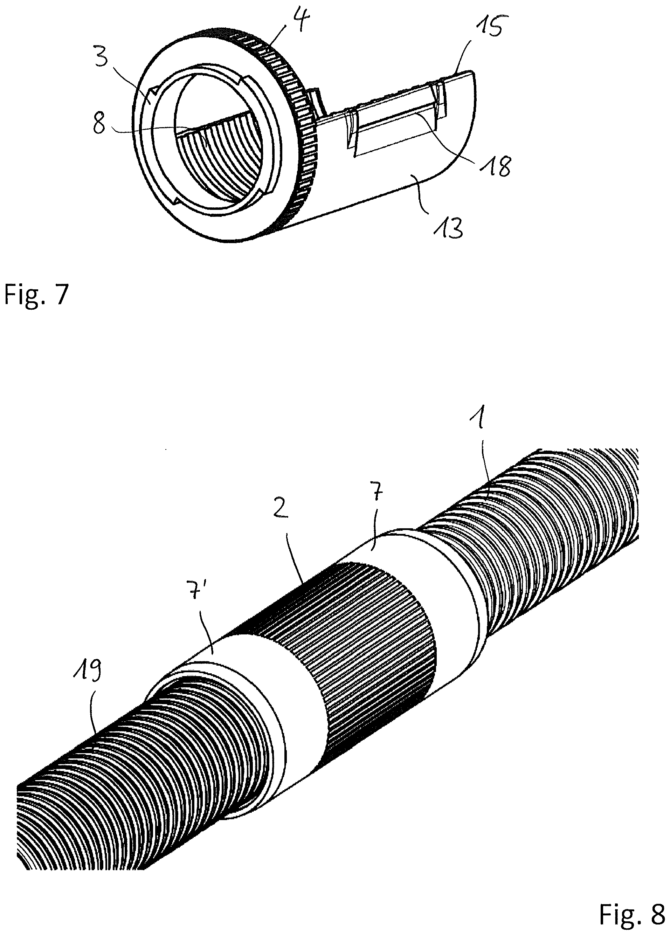

Die Figuren 6 und 7 entsprechen jeweils der Darstellung aus Figur 3, und gleiche Teile sind jeweils mit gleichen Bezugszeichen versehen, wobei in Figur 6 gegenüber Figur 3 das zweite Adapterteil 14 weggelassen worden ist, und in Figur 7 auch der erste Ringwellschlauch 1 entfernt wurde, um die Konstruktion dieses zweiten Ausführungsbeispiels eines erfindungsgemäß ausgestalteten Adapterstücks 2 weiter zu verdeutlichen.

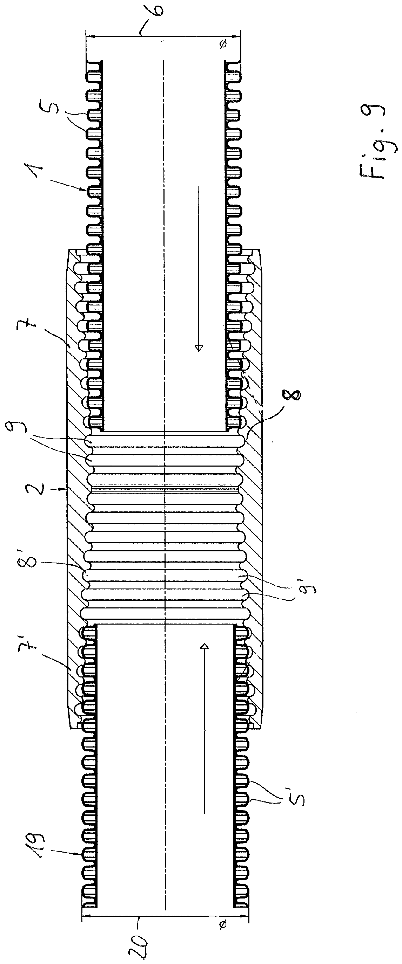

Die Figuren 8 und 9 zeigen ein drittes Ausführungsbeispiel für ein erfindungsgemäß ausgestaltetes Adapterstück 2, wiederum in einer isometrischen Darstellung (Figur 8) und einer seitlichen Schnittdarstellung (Figur 9). Dieses dritte Ausführungsbeispiel unterscheidet sich von den ersten beiden Ausführungsbeispielen grundlegend dadurch, dass das Adapterstück 2 als Schlauchkupplung ausgebildet ist, da es zwei gegenüberliegende Stutzen 7, 7' zum Einsetzen eines ersten Ringwellschlauchs 1 und eines zweiten Ringwellschlauchs 19 bildet. Dies ist in Figur 8 leicht erkennbar.

Wie Figur 9 zeigt, besitzt der zweite Ringwellschlauch 19 einen größeren, zweiten Schlauchdurchmesser 20 als der erste Ringwellschlauch 1 mit seinem ersten Schlauchdurchmesser 6. Es handelt sich beim vorliegenden Adapterstück 2 also nicht nur um eine Schlauchkupplung zum Verbinden zweiter Ringwellschläuche gleicher Nennweite - auch wenn dies mit diesem Adapterstück 2 ebenfalls möglich ist -, sondern es handelt sich außerdem um eine Art Universal-Übergangsstück für eine Verbindung und einen gleichzeitigen Übergang zwischen einem ersten Ringwellschlauch 1 mit erstem Schlauchdurchmesser 6 und einem zweiten Ringwellschlauch 19 mit zweitem Schlauchdurchmesser 20.

Die Konstruktion und Funktionsweise der beiden Stutzen 7, 7' des hier dargestellten Adapterstücks 2 entsprechen denjenigen des in den Figuren 1 und 2 dargestellten ersten Ausführungsbeispiels. Denn das Adapterstück 2 ist einteilig ausgestaltet und die Ringwellschläuche 1, 19 werden in die jeweiligen Stutzen 7, 7' soweit eingeschoben, bis die Außenkrempe 5, 5' der vordersten Wellung des Ringwellschlauchs 1, 19 einrastend bei derjenigen Ringnut 9, 9' angelangt ist, die auf die Außenkrempe 5 der vordersten Wellung zwängungsfrei passt. Der so eingesteckte Ringwellschlauch 1, 19 wird hierdurch formschlüssig im jeweiligen Stutzen 7, 7' festgehalten und gleichzeitig wird diese Verbindung durch den Formschluss zwischen den Ringnuten 9, 9' und den Außenkrempen 5, 5' abgedichtet, insbesondere wenn die Stutzen 7, 7' aus einem elastisch verformbaren Polymer bestehen oder mit einem solchen an ihren Innenkonturen 8, 8' ausgekleidet sind.

Wie anhand Figur 9 deutlich wird, beschränkt sich der Formschluss zwischen dem Stutzen 7` des Adapterstücks 2 und beispielsweise dem zweiten Ringwellschlauch 19 nicht auf einen Formschluss zwischen der Außenkrempe 5' der vordersten Welle und der mit ihrem Innendurchmesser passenden Ringnut 9`, sondern auch die nachfolgenden Außenkrempen 5' werden noch mit einem gewissen Formschluss in den sukzessive sich erweiternden Ringnuten 9' gehalten, was die Stabilität der Verbindung verbessert.

Es darf an dieser Stelle darauf hingewiesen werden, dass auch das dritte Ausführungsbeispiel eines Adapterstücks, das eine Universalkupplung bildet, alternativ zweiteilig ausgebildet werden kann, also mit einem ersten Adapterteil und einem zweiten Adapterteil, die voneinander trennbar sind, vorzugsweise in Form von Halbschalen mit oder ohne Scharnier, wie dies bereits anhand des zweiten Ausführungsbeispiels der Figuren 3 bis 7 beschrieben worden ist.

### Bezugszeichenliste

- 1: Ringwellschlauch (erster)
- 2: Adapterstück
- 3: Bajonettverschlusshälfte
- 4: Rändelung
- 5: Außenkrempen
- 6: Schlauchdurchmesser (erster)
- 7: Stutzen
- 8: Innenkontur
- 9: Ringnuten
- 10: Innendurchmesser
- 11: Stutzenöffnung
- 12: Einsteckrichtung
- 13: Adapterteil (erstes)
- 14: Adapterteil (zweites)
- 15: Trennfläche
- 16: Sicherungseinrichtung
- 17: Rastlasche
- 18: Rastkante
- 19: Ringwellschlauch (zweiter)
- 20: Schlauchdurchmesser (zweiter)

## Patentansprüche

1. Adapterstück zum alternativen Anschließen von mindestens zwei Ringwellschläuchen (1), deren Schlauchdurchmesser (6) verschieden sind, an eine Öffnung, eine Kupplung oder eine weiterführende Rohrleitung, wobei das Adapterstück (2) mit einem Stutzen (7) zum Einsetzen des anzuschließenden Ringwellschlauchs (1) versehen ist,
wobei der Stutzen (7) eine Innenkontur (8) mit Ringnuten (9) aufweist, die jeweils im Wesentlichen einer Negativform einer Wellenaußenkrempe des anzuschließenden Ringwellschlauchs (1) entspricht,
wobei der Innendurchmesser (10) des Stutzens (7) mindestens zwei Durchmesserstufen aufweist, wobei in der ersten Durchmesserstufe mindestens eine erste Ringnut (9) mit einem ersten Innendurchmesser (10) formschlüssig auf eine Außenkrempe (5) eines Ringwellschlauchs (1) mit einem ersten Schlauchdurchmesser (6) setzbar ist, während in der zweiten Durchmesserstufe mindestens eine zweite Ringnut (9) mit einem zweiten Innendurchmesser (10) formschlüssig auf eine Außenkrempe (5) eines Ringwellschlauchs (1) mit einem zweiten Schlauchdurchmesser (6) setzbar ist,
und wobei die Ringnut (9) mit kleinerem Innendurchmesser (10) weiter von einer Stutzenöffnung (11) entfernt angeordnet ist, als die Ringnut (9) mit größerem Innendurchmesser (10).

2. Adapterstück nach Anspruch 1,
wobei der Innendurchmesser (10) des Stutzens (7) mehrere Durchmesserstufen aufweist, sodass sich eine, von der Stutzenöffnung (11) beginnend, konisch verjüngende Innenkontur (8) ergibt.

3. Adapterstück nach einem der Ansprüche 1 oder 2,
wobei der Stutzen (7) des Adapterstücks (2) an seiner Innenkontur (8) mit einem elastisch verformbaren Polymer ausgekleidet ist.

4. Adapterstück nach Anspruch 3,
wobei zumindest der Stutzen (7) des Adapterstücks (2) aus Kunststoff besteht und in Zweikomponenten-Spritzgusstechnik mit der Auskleidung an seiner Innenkontur (8) versehen worden ist.

5. Adapterstück nach mindestens einem der Ansprüche 1 bis 4,
wobei das Adapterstück (2) zwei Adapterteile (13, 14) umfasst, deren Trennfläche (15) sich axial von der Stutzenöffnung (11) mindestens bis zu einem Bereich der Ringnut (9) mit dem kleinsten Innendurchmesser (10) erstreckt.

6. Adapterstück nach Anspruch 5,
wobei die beiden Adapterteile (13, 14) mit einem Scharnier verbunden sind, dessen Scharnierachse parallel zur Längsachse des Adapterstücks (2) verläuft, um das Adapterstück (2) an diesem Scharnier auf- und zuzuklappen.

7. Adapterstück nach einem der Ansprüche 5 oder 6,
wobei eine Sicherungseinrichtung (16) vorhanden ist, die die beiden Adapterteile (13, 14) in einem zugeklappten oder zusammengesetzten Zustand aneinander befestigt.

8. Adapterstück nach Anspruch 7,
wobei die Sicherungseinrichtung (16) im Wesentlichen aus mindestens einer Rastlasche (17) an einem der beiden Adapterteile (13, 14) und mindestens einer Rastkante (18) am anderen der beiden Adapterteile (13, 14) besteht.

9. Adapterstück nach mindestens einem der Ansprüche 1 bis 8,
wobei das Adapterstück (2) mit einer Anschlussvorrichtung zum Befestigen, vorzugsweise lösbaren Befestigen an einer Öffnung, einer Kupplung oder einer weiterführenden Rohrleitung versehen ist.

10. Adapterstück nach Anspruch 9,
wobei die Anschlussvorrichtung eine Bajonettverschlusshälfte (3) oder ein Rohrstück mit Außen- oder Innengewinde ist.

11. Verwendung eines Adapterstücks (2) nach mindestens einem der Ansprüche 1 bis 10 als Anschlussstück für Schlauchleitungen mit mindestens zwei unterschiedlichen Nennweiten an einem Luftverteilerkasten oder Luftsammelkasten für Lüftungssysteme.

12. Adapterstück nach mindestens einem der Ansprüche 1 bis 10,
wobei das Adapterstück (2) zwei Stutzen (7, 7`) zum Einsetzen von zwei Ringwellschläuchen (1, 19) aufweist und hierdurch eine Schlauchkupplung bildet.

13. Verwendung eines Adapterstücks (2) nach Anspruch 12 als Reduzierstück in einer Schlauchleitung.
